# FASCICULE DE BREVET EUROPEEN

(11) **EP 4 634 911 B1**
(45) Date de publication et mention de la délivrance du brevet: **02.09.2026**
(21) Numéro de dépôt: 23821203.9
(22) Date de dépôt: 06.12.2023
(51) Int. Cl.: G10L 17/18, G06F 21/32, G10L 17/04, G10L 17/02, G10L 17/06, G10L 17/10, G06N 3/088, G06N 3/0442, G06N 3/045, G06N 3/0895

(54) **TECHNIQUES D'AUTHENTIFICATION OU D'IDENTIFICATION D'UN INDIVIDU SUR LA BASE D'UN SIGNAL SONORE DE PAROLE, ET TECHNIQUES D'ENRÔLEMENT CORRESPONDANTES**
TECHNIKEN ZUR AUTHENTIFIZIERUNG ODER IDENTIFIZIERUNG EINER PERSON AUF DER BASIS EINES AUDIO-SPRACHSIGNALS UND ENTSPRECHENDE REGISTRIERUNGSTECHNIKEN
TECHNIQUES FOR FOR AUTHENTICATING OR IDENTIFYING AN INDIVIDUAL BASED ON AN AUDIO SPEECH SIGNAL AND CORRESPONDING ENROLMENT TECHNIQUES

(30) Priorité: 15.12.2022 FR 2213491
(43) Date de publication de la demande: 22.10.2025
(73) Titulaire: Worldline, 92800 Puteaux (FR)
(72) Inventeur: GUO, Li, 59650 VILLENEUVE D'ASCQ (FR); PIOTROWSKI, Florian, 62410 WINGLES (FR)
(74) Mandataire: Germain Maureau
(86) Numéro de dépôt international: PCT/EP2023/084499
(87) Numéro de publication internationale: WO 2024/126195

(56) Documents cités:
- WO-A1-2020/111880
- WO-A1-2022/044338
- WO-A1-2022/054994
- US-A1- 2021 280 171
- CHEN SANYUAN ET AL: "WavLM: Large-Scale Self-Supervised Pre-Training for Full Stack Speech Processing", IEEE JOURNAL OF SELECTED TOPICS IN SIGNAL PROCESSING, IEEE, US, vol. 16, no. 6, 1 July 2022 (2022-07-01), pages 1505 - 1518, XP011923960, ISSN: 1932-4553, [retrieved on 20220704], DOI: 10.1109/JSTSP.2022.3188113

## Description

### DOMAINE TECHNIQUE GÉNÉRAL

La présente invention se rapporte au domaine de la reconnaissance biométrique, en particulier basée sur la voix. Plus précisément, elle concerne un procédé d'authentification ou d'identification d'un individu sur la base d'un signal sonore de parole.

### ETAT DE L'ART

L'authentification/identification biométrique est la reconnaissance automatique d'une personne en utilisant des traits distinctifs, c.-à-d., des caractéristiques physiques (biologiques) ou traits comportementaux personnels automatiquement mesurables, robustes et distinctifs qui peuvent être utilisés pour vérifier (cas de l'authentification) ou déterminer (cas de l'identification) l'identité d'un individu. Les technologies biométriques améliorent la sûreté et le confort d'utilisation.

Plusieurs informations biométriques ont été utilisées telles que les empreintes digitales, le visage, l'iris, etc.

On connait également la reconnaissance biométrique vocale, appelée reconnaissance du locuteur (RL) dans lequel on utilise comme trait biométrique la voix en s'intéressant aux informations extralinguistiques du signal vocal. Les variations individuelles entre locuteurs ont deux origines essentielles. Dans un premier temps, les caractéristiques morphologiques de l'appareil de phonation sont différentes pour chaque locuteur, indépendamment de la phrase prononcée. Dans un second temps, une même phrase n'est pas prononcée de la même façon par deux locuteurs. En effet, on observe des différences dans les débits d'élocution, dans l'étendue des variations du discours ou encore des différences liées à leur milieu socioculturel.

La reconnaissance automatique du locuteur peut être dépendante ou indépendante du texte. Dans les systèmes de reconnaissance du locuteur dépendants du texte, on demande au locuteur de prononcer une chaîne de mots spécifique à la fois dans les phases de formation et de reconnaissance, alors que dans les systèmes indépendants du texte, le système de reconnaissance du locuteur reconnaît le locuteur indépendamment de la prononciation d'une phrase spécifique, voir le document Fathi E. Abd EI-Samie. Information Security for Automatic Speaker Identification. In Fathi E. Abd EI-Samie, editor, Information Security for Automatic Speaker Identification, SpringerBriefs in Speech Technology, pages 1-122. Springer, New York, NY, 2011*.*

La majorité des solutions de l'état de l'art utilisent des algorithmes par étapes. Un système de vérification du locuteur par étapes est composé d'un modèle amont (ou frontal) pour l'extraction des caractéristiques du locuteur et d'un modèle aval (ou dorsal) pour le calcul de la similarité des caractéristiques du locuteur. Le modèle frontal transforme un énoncé dans le domaine temporel ou le domaine temps-fréquence en un vecteur de caractéristiques à haute dimension. Le modèle dorsal calcule d'abord un score de similarité entre les caractéristiques de l'enrôlement et du locuteur test, puis compare le score avec un seuil.

Des techniques sont connues de la demande de brevet US2021/0280171A1 pour l'identification et la vérification d'individus utilisant des caractéristiques vectorielles indépendantes du locuteur pour déterminer une classification indépendantes du locuteur et utilisant des caractéristiques vectorielles dépendantes du locuteur pour déterminer une classification dépendante du locuteur et opérer à une fusion des scores de classification. Des techniques sont connues de la demande de brevet WO2020/111880 A1 pour l'authentification d'individus comparant des caractéristiques liées à l'environnement à des caractéristiques de référence pour ajuster un seuil d'authentification. Des techniques sont connues de la demande de brevet WO2022/054994A1 pour extraire des caractérisations de locuteur robustes par rapport à des éléments non-locuteur tel que le bruit ou un écho. Des techniques sont connues de la demande de brevet WO2022/044338A1 pour intégrer des données vocales et une caractéristique fréquentielle d'un dispositif d'entrée vocale.

Cependant, ces systèmes connus peuvent être trompés par des attaques d'usurpation, telles que l'usurpation d'identité (imitations ou jumeaux), le rejeu (audio pré-enregistré), la conversion texte-parole (conversion de texte en mots parlés) et la conversion vocale (conversion de la parole du locuteur source au locuteur cible).

La présente invention vient améliorer la situation.

### PRÉSENTATION DE L'INVENTION

La présente invention se rapporte donc selon un premier aspect à un procédé d'authentification ou d'identification d'un individu, le procédé étant caractérisé en ce qu'il comprend la mise en œuvre par des moyens de traitement de données d'un terminal candidat et/ou d'un premier serveur d'étapes de :
(a) Obtention d'un signal sonore de parole dudit individu dans un environnement candidat, acquis par un microphone du terminal candidat ;
(b) Détermination à partir dudit signal sonore d'
   - un premier vecteur représentatif de l'identité de l'individu en appliquant un premier modèle amont ; et
   - un deuxième vecteur représentatif dudit terminal candidat en appliquant un deuxième modèle amont, et/ou un troisième vecteur représentatif dudit environnement candidat en appliquant un troisième modèle amont.
(c) Authentification ou identification dudit individu sur la base du résultat de l'application :
   - au premier vecteur d'un premier modèle aval fonction d'une base de vecteurs représentatifs de l'identité d'individus de référence ; et
   - au deuxième vecteur d'un deuxième modèle aval fonction d'une base de vecteurs représentatifs de terminaux de référence associés auxdits individus de référence et/ou au troisième vecteur d'un troisième modèle aval fonction d'une base de vecteurs représentatifs d'environnements de référence associés auxdits individus de référence.

Selon des caractéristiques avantageuses et non limitatives :
A l'étape (c), l'individu est identifié ou authentifié si :
   - le premier vecteur coïncide avec un vecteur représentatif de l'identité d'un individu de référence attendu, de ladite base de vecteurs représentatifs de l'identité d'individus de référence ; et
   - le deuxième vecteur coïncide avec un vecteur représentatif d'un terminal de référence associés audit individu de référence attendu, de ladite base de vecteurs représentatifs de terminaux de référence associés auxdits individus de référence, et/ou
   - le troisième vecteur coïncide avec un vecteur représentatif d'un environnement de référence associés audit individu de référence attendu, de ladite base de vecteurs représentatifs d'environnements de référence associés auxdits individus de référence.
l'étape (b) est une étape de détermination à partir dudit signal sonore de :
   - le premier vecteur en appliquant le premier modèle amont ;
   - le deuxième vecteur en appliquant le deuxième modèle amont ; et
   - le troisième vecteur en appliquant le troisième modèle amont.

L'étape (c) est une étape d'authentification ou identification dudit individu sur la base du résultat de l'application :
- au premier vecteur du premier modèle aval ;
- au deuxième vecteur du deuxième modèle aval ; et
- au troisième vecteur du troisième modèle aval.

Au moins l'un des premier, deuxième, troisième modèle aval est un modèle appris sur une base de signaux audio de référence associés à des combinaisons d'un individu de référence, d'un terminal de référence et d'un environnement de référence.

Au moins l'un des premier, deuxième, troisième modèle amont est un modèle appris sur l'une desdites bases de vecteurs représentatifs de l'identité d'individus de référence, de vecteurs représentatifs de terminaux de référence associés auxdits individus de référence ou de vecteurs représentatifs d'environnements de référence associés auxdits individus de référence.

Chacun des premier, deuxième, troisième modèle amont est un modèle appris.

Le procédé comprend une étape préalable (a0) d'apprentissage, par des moyens de traitement de données d'un deuxième serveur des paramètres desdits premier, deuxième, troisième modèle amont.

Ledit apprentissage est mis en œuvre de manière auto-supervisée à partir de ladite base de signaux audio de référence associés à des combinaisons d'un individu de référence, d'un terminal de référence et d'un environnement de référence.

Ledit apprentissage comprend, pour chacun d'une pluralité de signaux de référence de ladite base de signaux audio de référence, un pré-traitement sélectionnant des première, deuxième et/ou troisième parties différentes de l'information dudit signal audio de référence, sur lesquelles les premier, deuxième et/ou troisième modèles amont sont appliqués.

Ledit apprentissage comprend, pour chacun de ladite pluralité de signaux de référence de ladite base de signaux audio de référence :
- la mise en œuvre dudit pré-traitement de sorte à sélectionner des première, deuxième et/ou troisième parties différentes de l'information dudit signal audio de référence,
- pour chaque partie sélectionnée dudit signal audio de référence le masquage partiel de ladite partie ;
- la détermination de :
   ∘ un premier vecteur d'apprentissage en appliquant à la première partie masquée du signal audio de référence le premier modèle amont ; et
   ∘ un deuxième vecteur d'apprentissage en appliquant à la deuxième partie masquée du signal audio de référence un deuxième modèle amont, et/ou un troisième vecteur d'apprentissage en appliquant à la troisième partie masquée du signal audio de référence un troisième modèle amont.
- la tentative de reconstruction à partir de chacun des premier deuxième et troisième vecteur d'apprentissage dudit signal audio de référence.

L'étape (a0) comprend en outre la génération desdites bases de vecteurs représentatifs de l'identité d'individus de référence, de vecteurs représentatifs de terminaux de référence associés auxdits individus de référence ou de vecteurs représentatifs d'environnements de référence associés auxdits individus de référence, en appliquant auxdits signaux audio de référence les premier, deuxième et troisième modèles amont appris.

Selon un deuxième aspect, l'invention concerne un procédé d'enrôlement de données pour authentification ou identification d'un individu de référence, le procédé étant caractérisé en ce qu'il comprend la mise en œuvre par des moyens de traitement de données d'un premier et/ou d'un deuxième serveur d'étapes de :
(A) Obtention d'un signal sonore de parole dudit individu de référence dans un environnement de référence, acquis par un microphone d'un terminal de référence ;
(B) Détermination à partir dudit signal sonore de
   - un premier vecteur représentatif de l'identité de l'individu de référence en appliquant un premier modèle amont ; et
   - un deuxième vecteur représentatif dudit terminal de référence en appliquant un deuxième modèle amont, et/ou un troisième vecteur représentatif dudit environnement de référence en appliquant un troisième modèle amont.
(C) Stockage sur des moyens de stockage de données du premier serveur ou du deuxième serveur :
   - du premier vecteur dans une base de vecteurs représentatifs de l'identité d'individus de référence ; et
   - du deuxième vecteur dans une base de vecteurs représentatifs de terminaux de référence associés auxdits individus de référence et/ou du troisième vecteur dans une base de vecteurs représentatifs d'environnements de référence associés auxdits individus de référence.

Selon un troisième aspect, l'invention concerne un équipement d'authentification ou d'identification d'un individu, caractérisé en ce qu'il comprend des moyens de traitement de données configurés pour :
Obtenir un signal sonore de parole dudit individu dans un environnement candidat, acquis par un microphone d'un terminal candidat ;
Déterminer à partir dudit signal sonore :
   - un premier vecteur représentatif de l'identité de l'individu en appliquant un premier modèle amont ; et
   - un deuxième vecteur représentatif dudit terminal candidat en appliquant un deuxième modèle amont, et/ou un troisième vecteur représentatif dudit environnement candidat en appliquant un troisième modèle amont.
authentifier ou identifier ledit individu sur la base du résultat de l'application :
   - au premier vecteur d'un premier modèle aval fonction d'une base de vecteurs représentatifs de l'identité d'individus de référence ; et
   - au deuxième vecteur d'un deuxième modèle aval fonction d'une base de vecteurs représentatifs de terminaux de référence associés auxdits individus de référence et/ou au troisième vecteur d'un troisième modèle aval fonction d'une base de vecteurs représentatifs d'environnements de référence associés auxdits individus de référence.

Selon un quatrième aspect, l'invention concerne un équipement d'enrôlement de données pour authentification ou identification d'un individu de référence, caractérisé en ce qu'il comprend des moyens de traitement de données configurés pour :
Obtenir un signal sonore de parole dudit individu de référence dans un environnement de référence, acquis par un microphone d'un terminal de référence ;
Déterminer à partir dudit signal sonore :
   - un premier vecteur représentatif de l'identité de l'individu de référence en appliquant un premier modèle amont ; et
   - un deuxième vecteur représentatif dudit terminal de référence en appliquant un deuxième modèle amont, et/ou un troisième vecteur représentatif dudit environnement de référence en appliquant un troisième modèle amont.
Stocker :
   - le premier vecteur dans une base de vecteurs représentatifs de l'identité d'individus de référence ; et
   - le deuxième vecteur dans une base de vecteurs représentatifs de terminaux de référence associés auxdits individus de référence et/ou le troisième vecteur dans une base de vecteurs représentatifs d'environnements de référence associés auxdits individus de référence.

Selon un cinquième et un sixième aspect, l'invention concerne un produit programme d'ordinateur comprenant des instructions de code pour l'exécution d'un procédé selon le premier aspect d'authentification ou d'identification d'un individu ou selon le deuxième aspect d'enrôlement de données pour authentification ou identification d'un individu de référence ; et un moyen de stockage lisible par un équipement informatique sur lequel est enregistré un produit programme d'ordinateur comprenant des instructions de code pour l'exécution d'un procédé selon le premier aspect d'authentification ou d'identification d'un individu ou selon le deuxième aspect d'enrôlement de données pour authentification ou identification d'un individu de référence.

### PRÉSENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
[Fig. 1] la figure 1 est un schéma d'un système pour la mise en œuvre du procédé selon l'invention ;
[Fig. 2]la figure 2 illustre schématiquement le principe du procédé selon l'invention ;
[Fig. 3a]la figure 3a est un logigramme représentant les étapes d'un premier mode de réalisation de l'invention ;
[Fig. 3b]la figure 3b est un logigramme représentant les étapes d'un deuxième mode de réalisation de l'invention ;
[Fig.4]la figure 4 illustre un apprentissage auto-supervisé dans un mode de réalisation préféré du procédé selon l'invention.

### DESCRIPTION DÉTAILLÉE

### Architecture

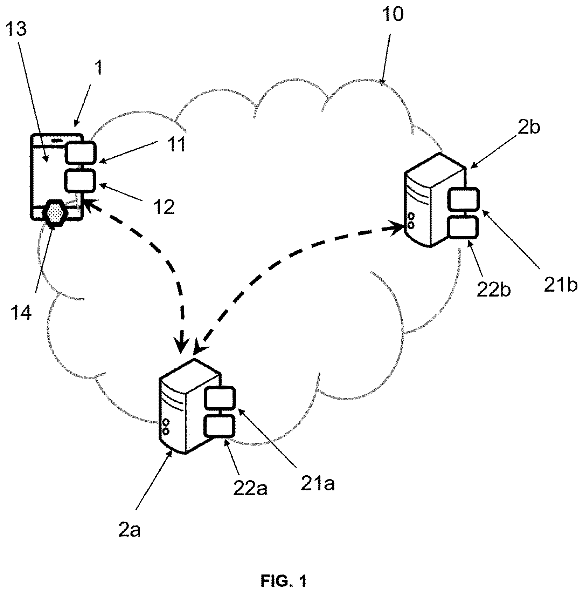

La présente invention concerne un procédé d'authentification ou d'identification d'un individu, c'est-à-dire pour déterminer ou vérifier l'identité de l'individu se présentant devant un terminal 1, dans un système tel que représenté sur la **figure 1****,** par exemple pour la mise en œuvre d'une transaction par ledit individu, mais également pour du contrôle d'accès, de la géolocalisation garantie, etc.

Ledit individu dont on cherche à vérifier l'identité est considéré « candidat », par opposition à des individus « de référence » dont on connait l'identité. Ledit système comprend le terminal 1 auquel à accès l'individu, dit terminal « candidat », par opposition à des terminaux dits de « référence » dont on sait qu'ils sont détenus ou du moins accessibles par un individu de référence. A noter que par commodité, dans la suite de la présente description on utilisera la référence numérique 1 de manière indifférenciée pour un terminal candidat ou de référence.

Le terminal 1 comprend des moyens de traitement de données 11 tel qu'un processeur, et le cas échéant des moyens de stockage de données 12 (une mémoire), des moyens d'interface 13 (un écran).Il s'agit typiquement d'un terminal mobile de type smartphone, mais alternativement le terminal 1 peut être une tablette, un ordinateur personnel, mais également des équipements fixes tels qu'une borne de contrôle d'accès, ou tout autre équipement détenu et contrôlé par une entité auprès de qui l'authentification/identification doit être effectuée.

Par ailleurs, et comme on le verra, le terminal 1 comprend un microphone 14 pour l'enregistrement de signaux audio (dans le domaine temporel ou le domaine temps-fréquence). Ce microphone 14 est généralement intégré, mais ce pourrait également être un périphérique connecté au reste du terminal 1, par exemple celui d'un casque connecté (filaire ou non) à un terminal 1 de type smartphone. L'ensemble constitue alors le terminal 1, et comme on expliquera plus loin on comprendra que le « smartphone seul » et le « smartphone avec le casque connecté » doivent être considérés comme deux terminaux candidats différents.

Le présent procédé est mis en œuvre par le terminal 1 et/ou un premier serveur 2a qui peut être confondu avec le terminal 1, ou distant et connecté par un réseau 10 tel que le réseau internet. De manière avantageuse, on a un deuxième serveur 2b (qui est un équipement d'apprentissage comme on le verra), typiquement distant (i.e. dans le réseau 10), mais qui pourrait être confondu avec le premier serveur 2a. Le premier serveur 2a peut par exemple être le serveur d'authentification d'une entité bancaire.

Chaque serveur 2a, 2b dispose également de moyens de traitement de données 21a, 21b (typiquement un processeur) et de moyens de stockage de données 22a, 22b (une mémoire, par exemple un disque dur). Comme on le verra, les moyens de traitement de données 21b du deuxième serveur 2b (mais également ceux du premier serveur 2a) peuvent stocker au moins une base de données d'apprentissage. Comme on le verra, on peut avoir en particulier trois bases d'apprentissage :
- Une base de vecteurs représentatifs de l'identité d'individus de référence,
- Une base de vecteurs représentatifs de terminaux de référence associés auxdits individus de référence,
- Une base de vecteurs représentatifs d'environnements de référence associés auxdits individus de référence.

De manière particulièrement préférée, on peut également (ou alternativement) avoir une seule base de signaux audio de référence « bruts » associés à des combinaisons d'un individu de référence, d'un terminal de référence et d'un environnement de référence. Les vecteurs des trois autres bases peuvent comme on le verra être reconstruits à partir de cette base.

### Procédé

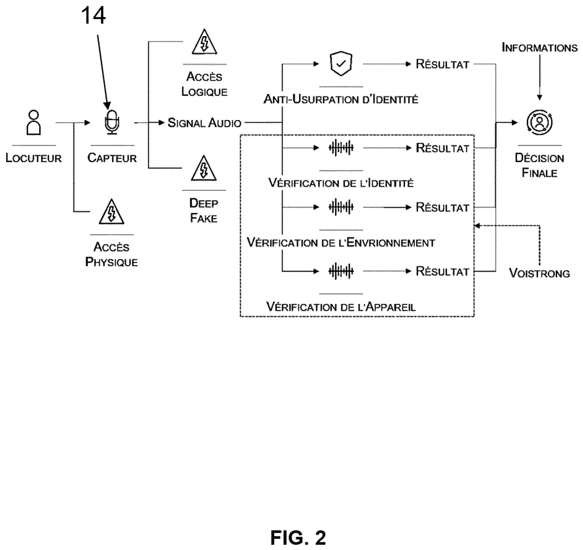

Le présent procédé concerne un processus d'authentification ou d'identification biométrique basé sur la voix, capable d'authentifier l'identité du locuteur, son environnement et/ou son terminal (préférentiellement les trois) à partir d'un seul énoncé comme illustré dans la **Figure 2****.** On constate en effet qu'on est capable sur un même signal sonore de parole d'avoir non seulement de quoi identifier le locuteur, mais également son environnement, et de manière encore plus surprenante son terminal. Pour ce dernier point, on constate même que deux terminaux du même modèle (et donc avec le même microphone) restent encore distinguables du fait de différences de fabrication imperceptibles, d'usure, et d'accessoires (par exemple une coque d'un smartphone influe sensiblement sur le signal audio).

Contrairement aux approches classiques qui vérifient un seul facteur (identité), la présente améliore la prise de décision et la sécurité des systèmes en combinant deux voire trois facteurs. De plus, l'utilisation de cette solution est très diversifiée.

Comme expliqué, les étapes du présent procédé peuvent être mises en œuvre par les moyens de traitement de données 11 du terminal candidat 1 et/ou par les moyens de traitement de données 21a du premier serveur 2a. En particulier, tout peut être mis en œuvre sur le terminal 1 par exemple dans un cas d'authentification de l'utilisateur du terminal pour accéder à une application, ou tout peut être mis en œuvre par le premier serveur 2a dans le cas d'authentification de l'utilisateur pour validation d'une transaction bancaire, ou encore partiellement de chaque côté par exemple pour une identification de l'utilisateur désirant accéder à un service en ligne.

Dans la figure 2, on voit les diverses sources possibles d'attaques : un accès physique au microphone 14, un accès logique au signal audio, et l'utilisation d'un deepfake. Ces trois attaques sont rendues impossibles par la combinaison des trois facteurs, puisqu'à chaque fois au moins un facteur ne pourra pas être reproduit. A noter que de manière connue on peut rajouter en parallèle un mécanisme d'antispoofing (anti-usurpation d'identité) classique par exemple de détection du vivant.

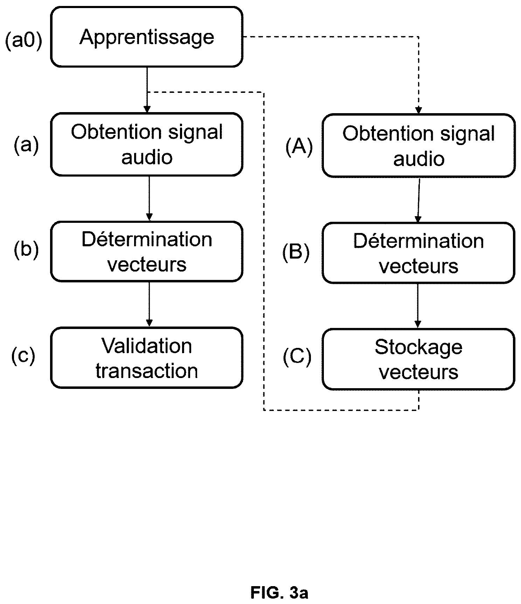

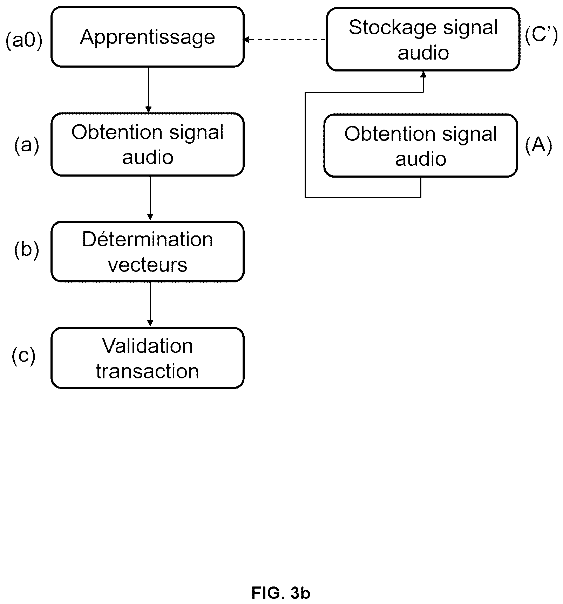

En référence aux **figures 3a** **et** **3b****,** le présent procédé commence par une étape (a) d'obtention d'un signal sonore de parole dudit individu dans un environnement candidat, acquis par un microphone 14 du terminal candidat 1. Plus précisément, l'étape (a) comprend soit directement l'acquisition dudit signal sonore par le terminal 1, soit la réception dudit signal (le cas échéant chiffré) par le serveur 2a depuis le terminal 1.

Par « signal sonore de parole dudit individu », on entend l'enregistrement audio de l'individu « locuteur », i.e. en train de prononcer une phrase (prédéterminée ou non), la phrase prononcée étant désignée parole. On notera qu'on n'est limité ici à aucune technique de reconnaissance du locuteur, de sorte que ladite parole est soit :
- Une phrase spécifique prédéterminée ;
- Une phrase attendue, c'est-à-dire que par exemple le terminal 1 affiche la phrase à prononcer, en mode challenge/response ;
- Une phrase quelconque.

Par ailleurs, la phrase est prononcée dans une environnement candidat, c'est-à-dire dans un contexte qui influe sur le signal audio et notamment son « fond sonore », qui peut être un bruit spécifique, d'autres paroles, de la musique, voire un silence. L'environnement désigné ici le lieu mais également l'horaire, puisqu'un même lieu peut être très différent en journée et la nuit.

Par exemple :
- dans la rue on entend en fond le bruit des voitures ;
- dans des bureaux en journée, on entend des gens parler ;
- dans un lieu commercial en journée on entendra de la musique
- dans un petit bureau fermé on entendra aucune autre voix mais de la réverbération
- etc.

Dans une étape (b), les moyens de traitement de données 11 ou 21a déterminent à partir dudit signal sonore :
- un premier vecteur représentatif de l'identité de l'individu en appliquant un premier modèle amont, et
- un deuxième vecteur représentatif dudit terminal candidat 1 en appliquant un deuxième modèle amont et un troisième vecteur représentatif dudit environnement candidat en appliquant un troisième modèle amont.

En d'autres termes, trois modèles dit amont (ou « frontal ») sont appliqués indépendamment sur le signal sonore de sorte à extraire les premier, deuxième et troisième vecteurs, qui sont des vecteurs de caractéristiques à haute dimension. Les modèles amont jouent le rôle d'encodeurs. A noter que l'étape (b) peut comprendre, avant l'application des modèles, celle d'un encodeur basique prédéterminé pour simplement numériser le signal

Enfin, dans une étape (c), les moyens de traitement de données 11 ou 21a authentifient/identifient ledit individu sur la base du résultat de l'application :
- au premier vecteur un premier modèle aval fonction d'une base de vecteurs représentatifs de l'identité d'individus de référence, et
- au deuxième vecteur un deuxième modèle aval fonction d'une base de vecteurs représentatifs de terminaux de référence associés auxdits individus de référence et au troisième vecteur un troisième modèle aval fonction d'une base de vecteurs représentatifs d'environnements de référence associés auxdits individus de référence.

En d'autres termes, trois modèles dits aval (ou « dorsal ») sont appliqués respectivement sur les premier, deuxième et troisième vecteurs en tant que facteurs d'authentification/identification.

Typiquement, l'individu est identifié/authentifié si (les résultats des modèles avals sont que) :
- le premier vecteur coïncide avec un vecteur représentatif de l'identité d'un individu de référence attendu, de ladite base (dans le cas d'une authentification on a un unique individu de référence attendu, alors que dans le cas d'une identification ce peut être tout individu de référence, et on a plus précisément une détermination de l'individu de référence attendu comme étant celui dont le vecteur représentatif de l'identité coïncide avec le premier vecteur) ; et
- le deuxième vecteur coïncide avec un vecteur représentatif d'un terminal de référence associé audit individu de référence attendu (formant terminal de référence attendu - on peut avoir un ou plusieurs terminaux de référence associés à un individu de référence), de ladite base, et
- le troisième vecteur coïncide avec un vecteur représentatif d'un environnement de référence associé audit individu de référence attendu (formant environnement attendu - on peut avoir un ou plusieurs environnement de référence associés à un individu de référence, et le cas échéant des combinaisons autorisées, pour chaque individu de référence, d'un environnement et d'un terminal de référence), de ladite base

On comprend donc qu'on a trois processus d'authentification/identification indépendants mais appliqués sur le même signal audio d'entrée, et que chaque processus doit avoir un résultat positif, de sorte à avoir une solution « forte ».

On a en pratique 6 modèles indépendants utilisés entre les étapes (b) et (c) : trois modèles d'extraction des premier, deuxième et troisième vecteurs (dits modèles amont), et trois modèles appliqués aux vecteurs (dit modèles aval).

Chacun de ces modèles peut être un algorithme prédéfini ou un modèle d'intelligence artificielle, appris en particulier sur lesdites bases de vecteurs formant base d'apprentissage, ou directement la base de signaux audio de référence, on détaillera plus tard un mode de réalisation particulièrement préféré. On note que de manière générale, le fait d'utiliser deux couches de modèles est dit « par étape » et est connu de l'homme du métier comme expliqué dans l'introduction. Ici ce qui est vraiment original est d'en utiliser plusieurs en parallèle à partir du même signal audio.

Par exemple, les modèles aval peuvent simplement réaliser une comparaison entre le vecteur d'entrée (premier, deuxième ou troisième vecteur) et chaque vecteur de référence correspondant, en calculant un score dit de similarité, par exemple à partir d'un calcul de distance, pour enfin le comparer à un seuil. On considère qu'il y a coïncidence si le score dépasse ledit seuil (i.e. la distance est inférieure à une distance minimale acceptable). A noter que les seuils peuvent être prédéterminés, ou dynamiques, en fonction du contexte (par exemple une application donnée pourra appliquer un crédit fort à l'appareil), voire en fonction du résultat des autres modèles (par exemple on peut prévoir que si le premier modèle trouve un score de similitude extrêmement élevé, on est déjà quasiment certain de l'identité de l'individu, et donc on tolèrera des scores plus faibles pour les deux autres facteurs. Inversement, si le premier modèle trouve un score de similitude juste au seuil, on a plus de doutes, et donc on requerra des scores plus élevé pour les deux autres facteurs).

Les trois scores de similarité peuvent en outre être utilisés pour calculer un score global de risque.

Alternativement, les modèles avals peuvent être des modèles de classification associant à un premier/deuxième/troisième vecteur une classe désignant une identité/un terminal/un environnement de référence parmi un ensemble de possibilités.

Pour les modèles amont, on connait notamment des modèles d'intelligence artificielle adaptés à l'encodage de caractéristiques de signaux audio pour de la RL, en particulier des réseaux de neurones de type RNN (réseau de neurones récurrents, par exemple LSTMs ou GRUs) ou des Transformers.

Par ailleurs, l'étape (b) peut comprendre un pré-traitement sélectionnant, amplifiant ou corrigeant des parties différentes (mais pas forcément disjointes) de l'information du signal audio, sur la base de chacune les vecteurs sont extraits (i.e. le premier modèle amont est appliqué sur la première partie, etc.).

A noter que dans le cas de modèles amont appris, on peut soit avoir quand même ce pré-traitement (notamment pour faire de l'augmentation des données d'apprentissage, voir plus loin), soit supposer que l'apprentissage fera automatiquement ressortir l'information la plus discriminante (i.e. les modèles sont appliqués sur le signal audio tel quel).

Dans tous les cas, on pourra se référer pour les modèles amont au document Sanyuan Chen, Chengyi Wang, Zhengyang Chen, Yu Wu, Shujie Liu, Zhuo Chen, Jinyu Li, Naoyuki Kanda, Takuya Yoshioka, Xiong Xiao, Jian Wu, Long Zhou, Shuo Ren, Yanmin Qian, Yao Qian, Jian Wu, Michael Zeng, Xiangzhan Yu, and Furu Wei. Wavlm : Large-scale self-supervised pre-training for full stack speech processing, 2021, et pour les modèles aval au document Brecht Desplanques, Jenthe Thienpondt, and Kris Demuynck. ECAPA-TDNN : Emphasized Channel Attention, Propagation and Aggregation in TDNN Based Speaker Verification. Interspeech 2020, pages 3830-3834, October 2020. arXiv : 2005.07143*.*

### Apprentissage auto-supervisé

Comme expliqué, typiquement au moins l'un des premier, deuxième, troisième modèle amont et premier, deuxième, troisième modèle aval est un modèle appris sur l'une desdites bases de vecteurs représentatifs de l'identité d'individus de référence, de vecteurs représentatifs de terminaux de référence associés auxdits individus de référence ou de vecteurs représentatifs d'environnements de référence associés auxdits individus de référence.

De manière préférée, chacun des premier, deuxième, troisième modèle amont est un modèle appris.

A ce titre, le procédé comprend avantageusement une étape (a0) préalable d'apprentissage, sur la ou les bases concernées (de vecteurs représentatifs de l'identité d'individus de référence, de vecteurs représentatifs de terminaux de référence associés auxdits individus de référence ou de vecteurs représentatifs d'environnements de référence associés auxdits individus de référence) des paramètres du ou des modèles concernés.

De manière particulièrement préférée, lesdites bases ne sont pas annotées, et l'apprentissage est de type auto-supervisé. En effet, il est difficile, si ce n'est impossible d'avoir des vérités-terrain de premier, deuxième ou troisième vecteurs de représentation de signaux audio de référence, i.e. on a d'origine en général seulement la base de signaux audio de référence et pas les premier, deuxième et troisième vecteurs associés.

L'apprentissage auto-supervisé ("self-supervised learning" en anglais - SSL) est une méthode d'apprentissage automatique, mise en œuvre à partir d'échantillons de données non étiquetés. Il peut être considéré comme une forme intermédiaire entre l'apprentissage supervisé et non supervisé.

L'apprentissage auto-supervisé obtient des signaux de supervision à partir des données elles-mêmes, en tirant souvent parti de la structure sousjacente des données. La présente technique de l'apprentissage auto-supervisé consiste à mettre en œuvre une tâche « prétexte » telle que prédire toute partie (ou propriété) non observée ou cachée de l'entrée (le signal audio) à partir de toute partie observée ou non cachée de l'entrée. Puisque l'apprentissage auto-supervisé utilise la structure des données elles-mêmes, il peut utiliser une variété de signaux de supervision dans des modalités cooccurrentes (par exemple, vidéo et audio) et dans de grands ensembles de données, le tout sans dépendre des étiquettes.

Ainsi l'apprentissage auto-supervisé permet aux modèles de développer une représentation particulière des données, suffisamment significative et discriminante pour reconstruire une partie manquante, et donc adaptées pour la tache réelle d'authentification/identification de l'individu.

Pour avoir trois modèles différents pour les trois facteurs sans labels, on utilise avantageusement des pré-traitements évoqués ci-avant (dans l'étape (b)) comme de l'augmentation de données : on force le modèle à se concentrer sur une partie seulement du signal, partie respectivement représentative de l'identité, de l'appareil ou de l'environnement, et on part de cette partie du signal. Par exemple :
- pour le premier vecteur (identité), on sélectionne en tant que première partie des réverbérations et bruits
- pour le deuxième vecteur (terminal): on sélectionne en tant que deuxième partie des bandes de fréquence (via filtres passe-bas, passe-haut, passe bande) et/ou bandes temporelles (via masques périodiques)..
- pour le troisième vecteur (environnement) : on sélectionne en tant que troisième partie des bruits et/ou des bandes de fréquence (via filtres passe-bas, passe-haut, passe bande) et/ou des bandes temporelles (via masques périodiques).

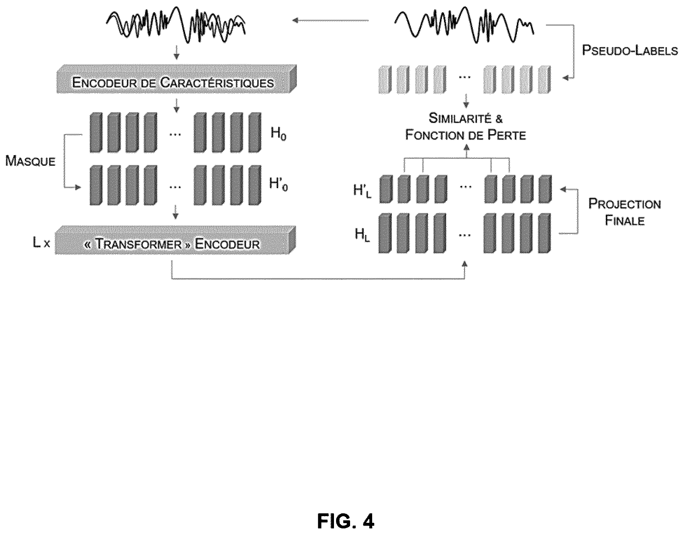

Ainsi, en référence à la **figure 4** (qui représente un facteur sur les trois), l'étape (a0) comprend dans le mode de réalisation particulièrement préféré, pour chacun d'une pluralité (voire tous) de signaux de référence de ladite base de signaux audio de référence associés à des combinaisons d'un individu de référence, d'un terminal de référence et d'un environnement de référence :
- la mise en œuvre dudit pré-traitement de sorte à sélectionner des première, deuxième et/ou troisième parties différentes de l'information dudit signal audio de référence,
- pour chaque partie sélectionnée dudit signal audio de référence le masquage partiel de ladite partie ;
- la détermination de :
   ∘ un premier vecteur d'apprentissage (en pratique représentatif de l'identité de l'individu de référence de ladite combinaison associée au signal de référence concerné lorsque l'apprentissage est terminé) en appliquant à la première partie masquée du signal audio de référence le premier modèle amont ; et
   ∘ un deuxième vecteur d'apprentissage (en pratique représentatif du terminal de référence de ladite combinaison lorsque l'apprentissage est terminé) en appliquant à la deuxième partie masquée du signal audio de référence un deuxième modèle amont, et/ou un troisième vecteur d'apprentissage (en pratique représentatif de l'environnement candidat de ladite combinaison lorsque l'apprentissage est terminé) en appliquant à la troisième partie masquée du signal audio de référence un troisième modèle amont.
- la tentative de reconstruction à partir de chacun des premier deuxième et troisième vecteur d'apprentissage dudit signal audio de référence (formant ainsi un pseudo-label). L'apprentissage mise à minimiser l'erreur de reconstruction en jouant sur les paramètres des premier, deuxième et troisième modèles. On note que le terme « vecteur d'apprentissage » signifie simplement que le vecteur n'a pas forcément de signification jusqu'à un stade avancé de l'apprentissage.

Dans l'exemple de la figure 4, en partant de signaux audio de référence, des pseudo-labels sont déterminés par l'encodeur basique évoqué avant (qui peut être un simple algorithme de numérisation du signal audio).

Partant des versions pré-traitées de ce signal (selon le modèle amont que l'on cherche à apprendre), on masque alors une partie de la représentation par l'encodeur basique et on demande au premier, deuxième ou troisième modèle amont en apprentissage (ici un transformer) de déterminer un vecteur représentatif (premier deuxième ou troisième vecteur, selon le modèle), puis dans une projection finale on tente de retrouver le pseudo-label en tant que vérité-terrain. Une fonction de loss évalue la qualité de cette prédiction et permet de faire varier les paramètres du modèle, jusqu'à convergence.

Dans un tel mode d'apprentissage auto-supervisé seulement à partir d'une base de signaux audio de référence, l'étape (a0) comprend en outre la génération desdites bases de vecteurs représentatifs de l'identité d'individus de référence, de vecteurs représentatifs de terminaux de référence associés auxdits individus de référence ou de vecteurs représentatifs d'environnements de référence associés auxdits individus de référence, en appliquant sur les signaux de référence les premier, deuxième et troisième modèles amont appris, typiquement pour ensuite mettre en œuvre l'étape (c) par comparaison directe.

Il peut, à ce stade, y avoir un léger ré-apprentissage des premier, deuxième et troisième modèles amont (ce que l'on appelle le fine-tuning), car il peut en effet y avoir à présent plusieurs signaux audio correspondant au même individu (par exemple avec des terminaux différents et/ou dans divers environnements - on verra plus loin l'enrôlement), cette fois-ci de manière supervisée.

Si les modèles aval sont des modèles d'intelligence artificielle, on peut dans l'étape (a0) également apprendre leurs paramètres, en particulier conventionnellement de manière supervisée puisque l'on dispose des labels (les signaux audio de référence sont associés à des combinaisons d'un individu de référence, d'un terminal de référence et d'un environnement de référence).

### Enrôlement

Selon un deuxième aspect, l'invention concerne un procédé d'enrôlement de données pour authentification ou identification d'un individu de référence, mis en œuvre par les moyens de traitement de données 21a, 21b du premier serveur 2a et/ou du deuxième serveur 2b. Comme pour le procédé d'authentification ou d'identification, il peut être mis tout ou partiellement sur chacun des premier et deuxième serveurs 2a, 2b. Selon un mode préféré, on a vraiment une séparation avec le premier serveur 2a ayant les fonctions d'authentification/identification et celles d'enrôlement, et le deuxième serveur 2a uniquement celles d'apprentissage, mais le terminal peut en pratique une partie des étapes d'authentification/identification et le deuxième serveur 2b une partie de celles d'enrôlement. Les deux serveurs 2a, 2b peuvent s'échanger les bases de données, mais de manière préférée les moyens de stockage 22a du premier serveur 2a stockent les trois bases de vecteurs représentatifs de l'identité d'individus de référence, de vecteurs représentatifs de terminaux de référence associés auxdits individus de référence ou de vecteurs représentatifs d'environnements de référence associés auxdits individus de référence, et les moyens de stockage 22b du premier serveur 2b stockent la base de signaux audio de référence associés à des combinaisons d'un individu de référence, d'un terminal de référence et d'un environnement de référence

Ce procédé peut être initié par l'individu sur son terminal 1, en supposant qu'il peut s'authentifier de manière séparée (par exemple par d'autres facteurs biométriques et/ou en présence d'une autorité), mais pas mis en œuvre sur le terminal 1 pour des questions de sécurité.

On comprend que l'individu renseigne donc son identité, mais également son terminal et/ou l'environnement actuels, en tant que terminal et/ou environnement de référence, par exemple en les nommant. A noter que le terminal peut être connu mais dans un autre environnement, ou au contraire il peut utiliser un nouveau terminal dans environnement connu.

Selon un premier mode de réalisation représenté par la figure 3a, à apprentissage préalable, le procédé comprend les étapes de :
(A) Obtention d'un signal sonore de parole dudit individu de référence dans l'environnement de référence, acquis par un microphone 14 du terminal de référence 1 (c'est l'équivalent de l'étape (a) du procédé selon le premier aspect) ;
(B) Détermination à partir dudit signal sonore de
   - un premier vecteur représentatif de l'identité de l'individu de référence en appliquant un premier modèle amont ; et
   - un deuxième vecteur représentatif dudit terminal de référence 1 en appliquant un deuxième modèle amont, et un troisième vecteur représentatif dudit environnement de référence en appliquant un troisième modèle amont (c'est l'équivalent de l'étape (b) du procédé selon le premier aspect) ;
(C) Stockage (typiquement sur les moyens de stockage de données 22a du premier serveur 2a) :
   - du premier vecteur dans la base de vecteurs représentatifs de l'identité d'individus de référence ; et
   - du deuxième vecteur dans la base de vecteurs représentatifs de terminaux de référence associés auxdits individus de référence et du troisième vecteur dans la base de vecteurs représentatifs d'environnements de référence associés auxdits individus de référence.

On comprend ici que l'identité de l'individu de référence est associée avec le terminal de référence et l'environnement de référence en question, et le cas échéant labélisée par exemple avec les noms donnés par l'individu. Et il peut tout à fait y avoir comme expliqué plusieurs terminaux/environnements associés à un même individu.

Selon un deuxième mode de réalisation, représenté par la figure 3b, principalement associé audit apprentissage auto-supervisé, on se contente, après l'étape (A) d'obtention d'un signal sonore de parole dudit individu de référence dans un environnement de référence, acquis par un microphone 14 d'un terminal de référence 1, dans une étape « (C') » de directement stocker (typiquement sur les moyens de stockage de données 22b du deuxième serveur 2a, 2b) ledit signal obtenu en tant que signal de référence associé à la combinaison de l'identité de l'individu de référence, du terminal de référence et de l'environnement de référence, dans ladite base de signaux audio de référence.

Seulement ensuite, l'étape (a0) est mise en œuvre (ou remise en œuvre), les modèles étant appris (ou mis à jour) et les premier, deuxième et troisième vecteurs correspondant audit signal de référence sont générés et stockés.

### Serveurs

Selon un deuxième et un troisième aspect, l'invention concerne les équipements pour la mise en œuvre des procédés selon l'invention. En particulier le premier serveur 2a et/ou le terminal 1 ont le rôle d'équipement d'authentification/identification, et le premier serveur 2a et/ou le deuxième serveur 2b ont le rôle d'équipement d'enrôlement. Le deuxième serveur 2b est par contrôle le seul en charge de l'apprentissage.

L'équipement d'authentification/identification comprend des moyens de traitement de données 11, 21a, et généralement des moyens de stockage de données 12, 22a. Le terminal 1 a une interface 13 et surtout un microphone 14.

Le moyens 11, 21a sont configurés pour :
Obtenir un signal sonore de parole dudit individu dans un environnement candidat, acquis par un microphone 14 d'un terminal candidat 1 ;
Déterminer à partir dudit signal sonore :
   - un premier vecteur représentatif de l'identité de l'individu en appliquant un premier modèle amont ; et
   - un deuxième vecteur représentatif dudit terminal candidat 1 en appliquant un deuxième modèle amont, et un troisième vecteur représentatif dudit environnement candidat en appliquant un troisième modèle amont.

Authentifier ou identifier ledit individu sur la base du résultat de l'application :
- au premier vecteur d'un premier modèle aval fonction d'une base de vecteurs représentatifs de l'identité d'individus de référence ; et
- au deuxième vecteur d'un deuxième modèle aval fonction d'une base de vecteurs représentatifs de terminaux de référence associés auxdits individus de référence et au troisième vecteur d'un troisième modèle aval fonction d'une base de vecteurs représentatifs d'environnements de référence associés auxdits individus de référence.

L'équipement d'enrôlement comprend des moyens de traitement de données 21a, 21b et généralement des moyens de stockage de données 22a, 22b. Le terminal 1 a une interface 13 et surtout un microphone 14.

Le moyens 21a, 21b sont configurés pour :
Soit
   Obtenir un signal sonore de parole dudit individu de référence dans un environnement de référence, acquis par un microphone 14 d'un terminal de référence 1 ;
   Déterminer à partir dudit signal sonore :
      - un premier vecteur représentatif de l'identité de l'individu de référence en appliquant un premier modèle amont ; et
      - un deuxième vecteur représentatif dudit terminal de référence (1) en appliquant un deuxième modèle amont, et un troisième vecteur représentatif dudit environnement de référence en appliquant un troisième modèle amont ;
   Stocker :
      - le premier vecteur dans une base de vecteurs représentatifs de l'identité d'individus de référence ; et
      - le deuxième vecteur dans une base de vecteurs représentatifs de terminaux de référence associés auxdits individus de référence et le troisième vecteur dans une base de vecteurs représentatifs d'environnements de référence associés auxdits individus de référence.
Soit
   Obtenir un signal sonore de parole dudit individu de référence dans un environnement de référence, acquis par un microphone 14 d'un terminal de référence 1 ; et
   Stocker ledit signal obtenu en tant que signal de référence associé à la combinaison de l'identité de l'individu de référence, du terminal de référence et de l'environnement de référence, dans ladite base de signaux audio de référence.

Selon un quatrième aspect, est proposé un ensemble du terminal 1, du premier serveur 1 et du système 2. Toutes ces éléments 1, 2a, 2b peuvent être connectés via un réseau 10.

### Produit programme d'ordinateur

Selon un cinquième et un sixième aspects, l'invention concerne un produit programme d'ordinateur comprenant des instructions de code pour l'exécution (en particulier sur les moyens de traitement de données 11, 21a, 21b) d'un procédé selon le premier aspect de l'invention d'authentification ou d'identification d'un individu ou selon le deuxième aspect d'enrôlement de données pour authentification ou identification d'un individu de référence, ainsi que des moyens de stockage lisibles par un équipement informatique (une mémoire 12, 22a, 22b) sur lequel on trouve ce produit programme d'ordinateur.

## Revendications

1. Procédé d'authentification ou d'identification d'un individu, le procédé étant **caractérisé en ce qu'**il comprend la mise en œuvre par des moyens de traitement de données (11, 21a) d'un terminal candidat (1) et/ou d'un premier serveur (2a) d'étapes de :
(a) Obtention d'un signal sonore de parole dudit individu dans un environnement candidat, acquis par un microphone (14) du terminal candidat (1) ;
(b) Détermination à partir dudit signal sonore d'
- un premier vecteur représentatif de l'identité de l'individu en appliquant un premier modèle amont ;
- un deuxième vecteur représentatif dudit terminal candidat (1) en appliquant un deuxième modèle amont ; et
- un troisième vecteur représentatif dudit environnement candidat en appliquant un troisième modèle amont.
(c) Authentification ou identification dudit individu sur la base du résultat de l'application :
- au premier vecteur d'un premier modèle aval fonction d'une base de vecteurs représentatifs de l'identité d'individus de référence ;
- au deuxième vecteur d'un deuxième modèle aval fonction d'une base de vecteurs représentatifs de terminaux de référence associés auxdits individus de référence ; et
- au troisième vecteur d'un troisième modèle aval fonction d'une base de vecteurs représentatifs d'environnements de référence associés auxdits individus de référence.

2. Procédé selon la revendication 1, dans lequel à l'étape (c), l'individu est identifié ou authentifié si :
- le premier vecteur coïncide avec un vecteur représentatif de l'identité d'un individu de référence attendu, de ladite base de vecteurs représentatifs de l'identité d'individus de référence ;
- le deuxième vecteur coïncide avec un vecteur représentatif d'un terminal de référence associés audit individu de référence attendu, de ladite base de vecteurs représentatifs de terminaux de référence associés auxdits individus de référence ; et
- le troisième vecteur coïncide avec un vecteur représentatif d'un environnement de référence associés audit individu de référence attendu, de ladite base de vecteurs représentatifs d'environnements de référence associés auxdits individus de référence.

3. Procédé selon l'une des revendications 1 et 2, dans lequel au moins l'un des premier, deuxième, troisième modèle aval est un modèle appris soit sur une base de signaux audio de référence associés à des combinaisons d'un individu de référence, d'un terminal de référence et d'un environnement de référence.

4. Procédé selon l'une des revendications 1 à 3, dans lequel au moins l'un des premier, deuxième, troisième modèle amont est un modèle appris sur l'une desdites bases de vecteurs représentatifs de l'identité d'individus de référence, de vecteurs représentatifs de terminaux de référence associés auxdits individus de référence ou de vecteurs représentatifs d'environnements de référence associés auxdits individus de référence.

5. Procédé selon la revendication 4, dans lequel chacun des premier, deuxième, troisième modèle amont est un modèle appris.

6. Procédé selon la revendication 5, comprenant une étape préalable (a0) d'apprentissage, par des moyens de traitement de données (21b) d'un deuxième serveur (2b) des paramètres desdits premier, deuxième, troisième modèle amont.

7. Procédé selon la revendication 6, dans lequel ledit apprentissage est mis en œuvre de manière auto-supervisée à partir de ladite base de signaux audio de référence associés à des combinaisons d'un individu de référence, d'un terminal de référence et d'un environnement de référence.

8. Procédé selon l'une des revendications 6 et 7, dans lequel ledit apprentissage comprend, pour chacun d'une pluralité de signaux de référence de ladite base de signaux audio de référence, un pré-traitement sélectionnant des première, deuxième et/ou troisième parties différentes de l'information dudit signal audio de référence, sur lesquelles les premier, deuxième et/ou troisième modèles amont sont appliqués.

9. Procédé selon les revendications 7 et 8 en combinaison, dans lequel ledit apprentissage auto-supervisé comprend, pour chacun de ladite pluralité de signaux de référence de ladite base de signaux audio de référence :
- la mise en œuvre dudit pré-traitement de sorte à sélectionner des première, deuxième et troisième parties différentes de l'information dudit signal audio de référence,
- pour chaque partie sélectionnée dudit signal audio de référence le masquage partiel de ladite partie ;
- la détermination de :
∘ un premier vecteur d'apprentissage en appliquant à la première partie masquée du signal audio de référence le premier modèle amont ;
∘ un deuxième vecteur d'apprentissage en appliquant à la deuxième partie masquée du signal audio de référence un deuxième modèle amont ; et
∘ un troisième vecteur d'apprentissage en appliquant à la troisième partie masquée du signal audio de référence un troisième modèle amont.
- la tentative de reconstruction à partir de chacun des premier deuxième et troisième vecteur d'apprentissage dudit signal audio de référence.

10. Procédé selon l'une des revendications 8 et 9, dans lequel l'étape (a0) comprend en outre la génération desdites bases de vecteurs représentatifs de l'identité d'individus de référence, de vecteurs représentatifs de terminaux de référence associés auxdits individus de référence ou de vecteurs représentatifs d'environnements de référence associés auxdits individus de référence, en appliquant auxdits signaux audio de référence les premier, deuxième et troisième modèles amont appris.

11. Procédé d'enrôlement de données pour authentification ou identification d'un individu de référence, le procédé étant **caractérisé en ce qu'**il comprend la mise en œuvre par des moyens de traitement de données (21a, 21b) d'un premier et/ou d'un deuxième serveur (2b) d'étapes de :
(A) Obtention d'un signal sonore de parole dudit individu de référence dans un environnement de référence, acquis par un microphone (14) d'un terminal de référence (1) ;
(B) Détermination à partir dudit signal sonore de
- un premier vecteur représentatif de l'identité de l'individu de référence en appliquant un premier modèle amont ;
- un deuxième vecteur représentatif dudit terminal de référence (1) en appliquant un deuxième modèle amont ; et
- un troisième vecteur représentatif dudit environnement de référence en appliquant un troisième modèle amont.
(C) Stockage sur des moyens de stockage de données (21a, 22b) du premier serveur 2a) ou du deuxième serveur (2b) :
- du premier vecteur dans une base de vecteurs représentatifs de l'identité d'individus de référence ;
- du deuxième vecteur dans une base de vecteurs représentatifs de terminaux de référence associés auxdits individus de référence ; et
- du troisième vecteur dans une base de vecteurs représentatifs d'environnements de référence associés auxdits individus de référence.

12. Equipement (11, 2a) d'authentification ou d'identification d'un individu, **caractérisé en ce qu'**il comprend des moyens de traitement de données (11, 21a) configurés pour :
Obtenir un signal sonore de parole dudit individu dans un environnement candidat, acquis par un microphone (14) d'un terminal candidat (1) ;
Déterminer à partir dudit signal sonore :
- un premier vecteur représentatif de l'identité de l'individu en appliquant un premier modèle amont ;
- un deuxième vecteur représentatif dudit terminal candidat (1) en appliquant un deuxième modèle amont ; et
- un troisième vecteur représentatif dudit environnement candidat en appliquant un troisième modèle amont.
authentifier ou identifier ledit individu sur la base du résultat de l'application :
- au premier vecteur d'un premier modèle aval fonction d'une base de vecteurs représentatifs de l'identité d'individus de référence ;
- au deuxième vecteur d'un deuxième modèle aval fonction d'une base de vecteurs représentatifs de terminaux de référence associés auxdits individus de référence ; et
- au troisième vecteur d'un troisième modèle aval fonction d'une base de vecteurs représentatifs d'environnements de référence associés auxdits individus de référence.

13. Equipement (2a, 2b) d'enrôlement de données pour authentification ou identification d'un individu de référence, **caractérisé en ce qu'**il comprend des moyens de traitement de données (21a, 21b) configurés pour :
Obtenir un signal sonore de parole dudit individu de référence dans un environnement de référence, acquis par un microphone (14) d'un terminal de référence (1) ;
Déterminer à partir dudit signal sonore :
- un premier vecteur représentatif de l'identité de l'individu de référence en appliquant un premier modèle amont ;
- un deuxième vecteur représentatif dudit terminal de référence (1) en appliquant un deuxième modèle amont ; et
- un troisième vecteur représentatif dudit environnement de référence en appliquant un troisième modèle amont.
Stocker :
- le premier vecteur dans une base de vecteurs représentatifs de l'identité d'individus de référence ;
- le deuxième vecteur dans une base de vecteurs représentatifs de terminaux de référence associés auxdits individus de référence ; et
- le troisième vecteur dans une base de vecteurs représentatifs d'environnements de référence associés auxdits individus de référence.

14. Produit programme d'ordinateur comprenant des instructions de code pour l'exécution d'un procédé selon l'une des revendications 1 à 10 d'authentification ou d'identification d'un individu ou selon la revendication 11 d'enrôlement de données pour authentification ou identification d'un individu de référence, lorsque ledit programme est exécuté sur un ordinateur.

15. Moyen de stockage lisible par un équipement informatique sur lequel est enregistré un produit programme d'ordinateur comprenant des instructions de code pour l'exécution d'un procédé selon l'une des revendications 1 à 10 d'authentification ou d'identification d'un individu ou selon la revendication 11 d'enrôlement de données pour authentification ou identification d'un individu de référence.

## Patentansprüche

1. Verfahren zur Authentifizierung oder Identifizierung einer Person, wobei das Verfahren **dadurch gekennzeichnet ist, dass** es die Durchführung folgender Schritte durch Datenverarbeitungsmittel (11, 21a) eines Kandidatenendgeräts (1) und/oder eines ersten Servers (2a) umfasst:
(a) Erfassung eines Sprachsignals der genannten Person in einer Kandidatenumgebung, das von einem Mikrofon (14) des Kandidatenendgeräts (1) aufgenommen wurde;
(b) Bestimmung aus des genannten Sprachsignals
- eines ersten Vektors, der die Identität der Person repräsentiert, durch Anwendung eines ersten vorgelagerten Modells;
- eines zweiten Vektors, der das Kandidatenendgerät (1) repräsentiert, durch Anwendung eines zweiten vorgelagerten Modells; und
- einen dritten Vektor, der die Kandidatenumgebung repräsentiert, durch Anwendung eines dritten Upstream-Modells.
(c) Authentifizierung oder Identifizierung der Person auf der Grundlage des Ergebnisses der Anwendung:
- auf den ersten Vektor eines ersten nachgelagerten Modells in Abhängigkeit von einer Basis von Vektoren, die die Identität von Referenzpersonen repräsentieren;
- auf den zweiten Vektor eines zweiten nachgelagerten Modells in Abhängigkeit von einer Basis von Vektoren, die für Referenzendgeräte repräsentativ sind, die den genannten Referenzpersonen zugeordnet sind; und
- mit dem dritten Vektor eines dritten nachgelagerten Modells in Abhängigkeit von einer Basis von Vektoren, die für Referenzumgebungen repräsentativ sind, die den genannten Referenzpersonen zugeordnet sind.

2. Verfahren nach Anspruch 1, wobei in Schritt (c) die Person identifiziert oder authentifiziert wird, wenn:
- der erste Vektor mit einem Vektor übereinstimmt, der die Identität einer erwarteten Referenzperson repräsentiert, aus der genannten Basis von Vektoren, die die Identität von Referenzpersonen repräsentieren;
- der zweite Vektor mit einem Vektor übereinstimmt, der ein Referenzendgerät repräsentiert, das der erwarteten Referenzperson zugeordnet ist, aus der Basis von Vektoren, die Referenzendgeräte repräsentieren, die den Referenzpersonen zugeordnet sind; und
- der dritte Vektor mit einem Vektor übereinstimmt, der eine mit der erwarteten Referenzperson verbundene Referenzumgebung repräsentiert, aus der Basis von Vektoren, die Referenzumgebungen repräsentieren, die mit den Referenzpersonen verbunden sind.

3. Verfahren nach einem der Ansprüche 1 und 2, wobei mindestens eines der ersten, zweiten und dritten nachgelagerten Modelle ein Modell ist, das entweder auf der Grundlage von Referenz-Audiosignalen trainiert wurde, die mit Kombinationen aus einer Referenzperson, einem Referenzendgerät und einer Referenzumgebung assoziiert sind.

4. Verfahren nach einem der Ansprüche 1 bis 3, wobei mindestens eines der ersten, zweiten und dritten Upstream-Modelle ein Modell ist, das auf einer der folgenden Grundlagen trainiert wurde: Vektoren, die die Identität von Referenzpersonen repräsentieren, Vektoren, die den mit den Referenzpersonen verbundenen Referenzendgeräten zugeordnet sind, oder Vektoren, die den mit den Referenzpersonen verbundenen Referenzumgebungen zugeordnet sind.

5. Verfahren nach Anspruch 4, wobei jedes der ersten, zweiten und dritten vorgelagerten Modelle ein trainiertes Modell ist.

6. Verfahren nach Anspruch 5, umfassend einen vorangehenden Schritt (a0) des Lernens der Parameter des ersten, zweiten und dritten vorgelagerten Modells durch Datenverarbeitungsmittel (21b) eines zweiten Servers (2b).

7. Verfahren nach Anspruch 6, wobei das Lernen auf selbstüberwachte Weise anhand der Basis von Referenz-Audiosignalen durchgeführt wird, die mit Kombinationen aus einer Referenzperson, einem Referenzendgerät und einer Referenzumgebung assoziiert sind.

8. Verfahren nach einem der Ansprüche 6 und 7, wobei das Lernen für jedes einer Vielzahl von Referenzsignalen der Basis von Referenz-Audiosignalen eine Vorverarbeitung umfasst, bei der erste, zweite und/oder dritte unterschiedliche Teile der Informationen des Referenz-Audiosignals ausgewählt werden, auf die das erste, zweite und/oder dritte vorgelagerte Modell angewendet wird.

9. Verfahren nach den Ansprüchen 7 und 8 in Kombination, wobei das selbstüberwachte Lernen für jedes der mehreren Referenzsignale der Basis von Referenz-Audiosignalen Folgendes umfasst:
- die Durchführung der Vorverarbeitung, um erste, zweite und dritte unterschiedliche Teile der Informationen des Referenz-Audiosignals auszuwählen,
- für jeden ausgewählten Teil des Referenz-Audiosignals das teilweise Maskierung dieses Teils;
- die Bestimmung:
∘ eines ersten Lernvektors durch Anwenden des ersten vorgelagerten Modells auf den ersten maskierten Teil des Referenz-Audiosignals;
∘ einen zweiten Lernvektor durch Anwenden eines zweiten vorgelagerten Modells auf den zweiten maskierten Teil des Referenz-Audiosignals und
∘ einen dritten Lernvektor durch Anwenden eines dritten Upstream-Modells auf den dritten maskierten Teil des Referenz-Audiosignals.
- Versuchen, das Referenz-Audiosignal aus jedem der ersten, zweiten und dritten Lernvektoren zu rekonstruieren.

10. Verfahren nach einem der Ansprüche 8 und 9, wobei Schritt (a0) ferner das Erzeugen der Basen von Vektoren, die die Identität von Referenzpersonen repräsentieren, von Vektoren, die mit den Referenzpersonen assoziierte Referenzendgeräte repräsentieren, oder von Vektoren, die mit den Referenzpersonen assoziierte Referenzumgebungen repräsentieren, durch Anwenden des ersten, zweiten und dritten gelernten Upstream-Modells auf die Referenz-Audiosignale umfasst.

11. Verfahren zur Erfassung von Daten zur Authentifizierung oder Identifizierung einer Referenzperson, wobei das Verfahren **dadurch gekennzeichnet ist, dass** es die Durchführung folgender Schritte durch Datenverarbeitungsmittel (21a, 21b) eines ersten und/oder eines zweiten Servers (2b) umfasst:
(A) Erfassung eines Sprachschallsignals der Referenzperson in einer Referenzumgebung, das von einem Mikrofon (14) eines Referenzendgeräts (1) aufgenommen wurde;
(B) Bestimmung aus dem genannten Sprachsignal
- eines ersten Vektors, der die Identität der Referenzperson repräsentiert, durch Anwendung eines ersten Upstream-Modells;
- einen zweiten Vektor, der das Referenzendgerät (1) repräsentiert, durch Anwendung eines zweiten vorgelagerten Modells; und
- einen dritten Vektor, der die Referenzumgebung repräsentiert, durch Anwendung eines dritten Upstream-Modells.
(C) Speichern auf Datenspeichermitteln (21a, 22b) des ersten Servers (2a) oder des zweiten Servers (2b):
- den ersten Vektor in einer Basis von Vektoren, die die Identität von Referenzpersonen repräsentieren;
- den zweiten Vektor in einer Basis von Vektoren, die für die den genannten Referenzpersonen zugeordneten Referenzendgeräte repräsentativ sind; und
- den dritten Vektor in einer Basis von Vektoren, die für die den genannten Referenzpersonen zugeordneten Referenzumgebungen repräsentativ sind.

12. Vorrichtung (11, 2a) zur Authentifizierung oder Identifizierung einer Person, **dadurch gekennzeichnet, dass** sie Datenverarbeitungsmittel (11, 21a) umfasst, die so konfiguriert sind, dass sie:
ein von der Person in einer Kandidatenumgebung stammendes Sprachsignal zu erfassen, das von einem Mikrofon (14) eines Kandidatenterminals (1) aufgenommen wurde;
aus dem Sprachsignal zu bestimmen:
- einen ersten Vektor, der die Identität der Person repräsentiert, durch Anwendung eines ersten vorgelagerten Modells;
- einen zweiten Vektor, der das Kandidatenendgerät (1) repräsentiert, durch Anwendung eines zweiten vorgelagerten Modells; und
- einen dritten Vektor, der die Kandidatenumgebung repräsentiert, durch Anwendung eines dritten vorgelagerten Modells.
Authentifizierung oder Identifizierung der Person auf der Grundlage des Ergebnisses der Anwendung:
- auf den ersten Vektor eines ersten nachgelagerten Modells in Abhängigkeit von einer Basis von Vektoren, die die Identität von Referenzpersonen repräsentieren;
- mit dem zweiten Vektor eines zweiten nachgelagerten Modells in Abhängigkeit von einer Basis von Vektoren, die die Referenzendgeräte repräsentieren, die den genannten Referenzpersonen zugeordnet sind; und
- mit dem dritten Vektor eines dritten nachgelagerten Modells in Abhängigkeit von einer Basis von Vektoren, die für Referenzumgebungen repräsentativ sind, die den Referenzpersonen zugeordnet sind.

13. Vorrichtung (2a, 2b) zur Erfassung von Daten zur Authentifizierung oder Identifizierung einer Referenzperson, **dadurch gekennzeichnet, dass** sie Datenverarbeitungsmittel (21a, 21b) umfasst, die so konfiguriert sind, dass sie:
Ein von einem Mikrofon (14) eines Referenzendgeräts (1) erfasstes Sprachsignal der Referenzperson in einer Referenzumgebung zu erfassen;
aus dem Sprachsignal zu bestimmen:
- einen ersten Vektor, der die Identität der Referenzperson repräsentiert, durch Anwendung eines ersten vorgelagerten Modells;
- einen zweiten Vektor, der das Referenzendgerät (1) repräsentiert, durch Anwendung eines zweiten vorgelagerten Modells; und
- einen dritten Vektor, der die Referenzumgebung repräsentiert, durch Anwendung eines dritten vorgelagerten Modells.
Speichern:
- den ersten Vektor in einer Basis von Vektoren, die die Identität von Referenzpersonen repräsentieren;
- den zweiten Vektor in einer Basis von Vektoren, die die Referenzendgeräte repräsentieren, die den genannten Referenzpersonen zugeordnet sind; und
- den dritten Vektor in einer Basis von Vektoren, die für die den Referenzpersonen zugeordneten Referenzumgebungen repräsentativ sind.

14. Ein Computerprogrammprodukt, das Codeanweisungen zur Ausführung eines Verfahrens gemäß einem der Ansprüche 1 bis 10 zur Authentifizierung oder Identifizierung einer Person oder gemäß Anspruch 11 zur Erfassung von Daten zur Authentifizierung oder Identifizierung einer Referenzperson umfasst, wenn das Programm auf einem Computer ausgeführt wird.

15. Ein von einer Computereinrichtung lesbares Speichermedium, auf dem ein Computerprogrammprodukt aufgezeichnet ist, das Codeanweisungen zur Ausführung eines Verfahrens gemäß einem der Ansprüche 1 bis 10 zur Authentifizierung oder Identifizierung einer Person oder gemäß Anspruch 11 zur Erfassung von Daten zur Authentifizierung oder Identifizierung einer Referenzperson umfasst.

## Claims

1. A method for authenticating or identifying an individual, the method being **characterized in that** it comprises the implementation by data processing means (11, 21a) of a candidate terminal (1) and/or of a first server (2a) of steps of:
(a) Obtaining a speech sound signal of said individual in a candidate environment, acquired by a microphone (14) of the candidate terminal (1);
(b) Determining from said sound signal
- a first vector representative of the identity of the individual by applying a first upstream model;
- a second vector representative of said candidate terminal (1) by applying a second upstream model; and
- a third vector representative of said candidate environment by applying a third upstream model.
(c) Authenticating or identifying said individual based on the result of the application:
- to the first vector of a first downstream model depending on a base of vectors representative of the identity of reference individuals;
- to the second vector of a second downstream model depending on a base of vectors representative of reference terminals associated with said reference individuals; and
- to the third vector of a third downstream model depending on a base of vectors representative of reference environments associated with said reference individuals.

2. The method according to claim 1, wherein, in step (c), the individual is identified or authenticated if:
- the first vector coincides with a vector representative of the identity of an expected reference individual, of said base of vectors representative of the identity of reference individuals;
- the second vector coincides with a vector representative of a reference terminal associated with said expected reference individual, of said base of vectors representative of reference terminals associated with said reference individuals; and
- the third vector coincides with a vector representative of a reference environment associated with said expected reference individual, of said base of vectors representative of reference environments associated with said reference individuals.

3. The method according to any of claims 1 and 2, wherein at least one of the first, second, third downstream model is a model learned either on a base of reference audio signals associated with combinations of a reference individual, of a reference terminal and of a reference environment.

4. The method according to any of claims 1 to 3, wherein at least one of the first, second, third upstream models is a model learned on one of said bases of vectors representative of the identity of reference individuals, of vectors representative of reference terminals associated with said reference individuals or of vectors representative of reference environments associated with said reference individuals.

5. The method according to claim 4, wherein each of the first, second, third upstream model is a learned model.

6. The method according to claim 5, comprising a prior step (a0) of learning, by data processing means (21b) of a second server (2b), the parameters of said first, second, third upstream model.

7. The method according to claim 6, wherein said learning is implemented in a self-supervised manner from said base of reference audio signals associated with combinations of a reference individual, of a reference terminal and of a reference environment.

8. The method according to any of claims 6 and 7, wherein said learning comprises, for each of a plurality of reference signals of said base of reference audio signals, pre-processing selecting first, second and/or third different parts of the information of said reference audio signal, on which the first, second and/or third upstream models are applied.

9. The method according to claims 7 and 8 in combination, wherein said self-supervised learning comprises, for each of said plurality of reference signals of said base of reference audio signals:
- implementing said pre-processing so as to select first, second and third different parts of the information of said reference audio signal,
- for each selected part of said reference audio signal, partially masking said part;
- determining:
∘ a first learning vector by applying to the first masked part of the reference audio signal the first upstream model;
∘ a second learning vector by applying to the second masked part of the reference audio signal a second upstream model, and
∘ a third learning vector by applying to the third masked part of the reference audio signal a third upstream model.
- attempting to reconstruct from each of the first, second and third learning vectors said reference audio signal.

10. The method according to any of claims 8 and 9, wherein step (a0) further comprises generating said bases of vectors representative of the identity of reference individuals, of vectors representative of reference terminals associated with said reference individuals or of vectors representative of reference environments associated with said reference individuals, by applying to said reference audio signals the first, second and third learned upstream models.

11. The method for enrolling data for authentication or identification of a reference individual, the method being **characterized in that** it comprises the implementation by data processing means (21a, 21b) of a first and/or a second server (2b) of steps of:
(A) Obtaining a speech sound signal of said reference individual in a reference environment, acquired by a microphone (14) of a reference terminal (1);
(B) Determining from said sound signal
- a first vector representative of the identity of the reference individual by applying a first upstream model;
- a second vector representative of said reference terminal (1) by applying a second upstream model; and
- a third vector representative of said reference environment by applying a third upstream model.
(C) Storing on data storage means (21a, 22b) of the first server 2a) or of the second server (2b):
- the first vector in a base of vectors representative of the identity of reference individuals;
- the second vector in a base of vectors representative of reference terminals associated with said reference individuals; and
- the third vector in a base of vectors representative of reference environments associated with said reference individuals.

12. An equipment (11, 2a) for authenticating or identifying an individual, **characterized in that** it comprises data processing means (11, 21a) configured to:
Obtain a speech sound signal from said individual in a candidate environment, acquired by a microphone (14) of a candidate terminal (1);
Determine from said sound signal:
- a first vector representative of the identity of the individual by applying a first upstream model;
- second vector representative of said candidate terminal (1) by applying a second upstream model; and
- a third vector representative of said candidate environment by applying a third upstream model.
authenticate or identify said individual based on the result of the application:
- to the first vector of a first downstream model depending on a base of vectors representative of the identity of reference individuals;
- to the second vector of a second downstream model depending on a base of vectors representative of reference terminals associated with said reference individuals; and
- to the third vector of a third downstream model depending on a base of vectors representative of reference environments associated with said reference individuals.

13. An equipment (2a, 2b) for enrolling data for authentication or identification of a reference individual, **characterized in that** it comprises data processing means (21a, 21b) configured to:
Obtain a speech sound signal of said reference individual in a reference environment, acquired by a microphone (14) of a reference terminal (1);
Determine from said sound signal:
- a first vector representative of the identity of the reference individual by applying a first upstream model;
- a second vector representative of said reference terminal (1) by applying a second upstream model; and
- a third vector representative of said reference environment by applying a third upstream model.
Store:
- the first vector in a base of vectors representative of the identity of reference individuals;
- the second vector in a base of vectors representative of reference terminals associated with said reference individuals; and
- the third vector in a base of vectors representative of reference environments associated with said reference individuals.

14. A computer program product comprising code instructions for executing a method according to any of claims 1 to 10 for authenticating or identifying an individual or according to claim 11 for enrolling data for authentication or identification of a reference individual, when said program is executed on a computer.

15. A storage medium readable by computer equipment on which is recorded a computer program product comprising code instructions for executing a method according to any of claims 1 to 10 for authenticating or identifying an individual or according to claim 11 for enrolling data for authentication or identification of a reference individual.
